(19)

Europäisches
Patentamt

European
Patent Office

Office européen
des brevets

(11) **EP 4 475 072 A1**

(12) **EUROPEAN PATENT APPLICATION**

(43) Date of publication:
**11.12.2024  Bulletin 2024/50**

(21) Application number: **23178433.1**

(22) Date of filing: **09.06.2023**

(51) International Patent Classification (IPC):
**G06T 7/00** *(2017.01)*      **G06T 7/11** *(2017.01)*
**G06T 7/66** *(2017.01)*

(52) Cooperative Patent Classification (CPC):
**G06T 7/0012; G06T 7/11; G06T 7/66;**
G06T 2207/10101; G06T 2207/20021;
G06T 2207/20076; G06T 2207/20081;
G06T 2207/20084; G06T 2207/30101

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Helmholtz Zentrum München - Deutsches
Forschungszentrum für Gesundheit und Umwelt
(GmbH)
85764 Neuherberg (DE)**

• **Deutsches Herzzentrum München
80636 Munich (DE)**

(72) Inventors:
• **Koch, Valentin
85764 Neuherberg (DE)**
• **Nicol, Philipp
80636 München (DE)**

(74) Representative: **Linsmeier, Josef
Wallinger Ricker Schlotter Tostmann
Patent- und Rechtsanwälte Partnerschaft mbB
Zweibrückenstrasse 5-7
80331 München (DE)**

(54) **METHOD AND APPARATUS FOR PROCESSING OCT IMAGES OF VASCULAR TISSUE, IN PARTICULAR NEOINTIMA, AND SYSTEM FOR OCT IMAGING OF VASCULAR TISSUE**

(57)    The disclosure relates to a computer-implemented method and an apparatus for processing optical coherence tomography (OCT) images of vascular tissue, in particular neointima, and a system for OCT imaging of vascular tissue. The method comprises training a first artificial neural network (1) comprising the following steps: a) providing or receiving a plurality of first cross-sectional OCT training images (11) of one or more blood vessels, b) determining, for each first OCT training image (11), a center point (C) of a first image segment (21') representing a lumen of the blood vessel in the respective first OCT training image (11), c) dividing each first OCT training image (11) into OCT training image sections (Q1'-Q4'), in particular quadrants, located around the center point (C) of the respective first OCT training image (11), thereby obtaining a plurality of OCT training image sections (Q1'-Q4'), d) assigning a classification information (A1-A4) to each OCT training image section (Q1'-Q4'), the classification information (A1-A4) classifying the respective OCT training image section (Q1'-Q4') with respect to vascular tissue, in particular with respect to neointima, of the blood vessel represented in the respective OCT training image section (Q1'-Q4'), and e) training the first artificial neural network (1), which comprises an input layer (1a) and an output layer (1b), the training comprising: i) inputting the plurality of OCT training image sections (Q1'-Q4') at the input layer (1a), ii) obtaining, for each inputted OCT training image section (Q1'-Q4'), an output classification information (O1-O4) at the output layer (1b), the output classification information (O1-O4) classifying the respectively inputted OCT training image section (Q1'-Q4') with respect to vascular tissue, in particular with respect to neointima, of the blood vessel represented in the respectively inputted OCT training image section (Q1'-Q4'), and iii) comparing, for each inputted OCT training image section (Q1'-Q4'), the output classification information (O1-O4) with the classification information (A1-A4) assigned to the respectively inputted OCT training image section (Q1'-Q4'), in particular by computing a loss function $\lambda$ which quantifies a difference between the classification information (A1-A4) assigned to the respectively inputted OCT training image section (Q1'-Q4') and the output classification information (O1 to O4).

Fig. 5

## Description

The present disclosure relates to a method and an apparatus for processing optical coherence tomography (OCT) images of vascular tissue, in particular neointima, and a system for OCT imaging of vascular tissue.

Interventional revascularization by percutaneous coronary intervention with stent implantation is an important treatment option for patients with obstructive coronary artery disease. Despite significant advancements in contemporary drug-eluting stents (DES), a proportion of patients still experience stent-related events such as in-stent restenosis or stent thrombosis in the long-term. The development of mature and healthy stent-covering neointima is critical to prevent these adverse events. However, delayed vascular healing can impair neointimal development and contribute to stent failure. Hence, immature or diseased neointima plays a significant role in a substantial portion of cases with stent failure. Optical coherence tomography (OCT) is a high-resolution intravascular imaging modality that provides detailed visualization of the coronary vasculature and can be used to assess the mode of stent failure. Using OCT, neointima can be visualized *in vivo* and characterized as homogenous or heterogenous. Previous studies have shown that homogenous neointimal tissue has a favorable phenotype, while heterogenous neointimal tissue may be associated with de novo atherosclerosis ("neoatherosclerosis") and a worse clinical outcome. Therefore, accurate detection and distinction of neointimal tissue is an important step for identifying patients at risk. However, evaluation of OCT images is time-consuming and highly dependent on clinician experience, which can limit clinical availability and transferability. Moreover, the visual interpretation of OCT images by clinicians in daily practice may result in missing or underestimating relevant pathological changes. Hence, more standardized approaches to OCT image analysis are desirable.

It is an object of present disclosure to provide a method and an apparatus for processing OCT images of vascular tissue and a system for OCT imaging of vascular tissue which are improved, in particular with respect to the aforementioned needs.

The object is achieved by a computer-implemented method for processing OCT images of vascular tissue according to the independent claim, an according apparatus for processing OCT images of vascular tissue, an according system for OCT imaging of vascular tissue and an according computer program product.

According to a first aspect of present disclosure, a computer-implemented method for processing optical coherence tomography (OCT) images of vascular tissue comprises: a) providing or receiving a plurality of first cross-sectional OCT training images of one or more blood vessels; b) determining, for each first OCT training image, a center point of a first image segment representing a lumen of the blood vessel in the respective first OCT training image; c) dividing each first OCT training image into OCT training image sections, in particular quadrants, located around the center point of the respective first OCT training image, thereby obtaining a plurality of OCT training image sections; d) assigning a classification information to each OCT training image section, the classification information classifying the respective OCT training image section with respect to vascular tissue, in particular with respect to neointima, of the blood vessel represented in the respective OCT training image section; and e) training the first artificial neural network, which comprises an input layer and an output layer, the training comprising: i) inputting the plurality of OCT training image sections at the input layer; ii) obtaining, for each inputted OCT training image section, an output classification information at the output layer, the output classification information classifying the respectively inputted OCT training image section with respect to vascular tissue, in particular with respect to neointima, of the blood vessel represented in the respectively inputted OCT training image section; and iii) comparing, for each inputted OCT training image section, the output classification information with the classification information assigned to the respectively inputted OCT training image section.

According to a second aspect of present disclosure, an apparatus for processing optical coherence tomography (OCT) images of vascular tissue comprises: a receiving interface configured to receive a plurality of first and/or second cross-sectional OCT training images of one or more blood vessels and/or to receive a plurality of cross-sectional OCT images of at least one blood vessel; and a processor configured to process the received first and/or second cross-sectional OCT training images and/or the received OCT images, respectively, according to the method of the first aspect.

According to a third aspect of present disclosure, a system for optical coherence tomography (OCT) imaging of vascular tissue comprises: an imaging apparatus configured to acquire a plurality of cross-sectional OCT images of at least one blood vessel; the apparatus according to the second aspect, wherein the receiving interface is configured to receive the acquired OCT images, and the processor is configured to obtain, for each received OCT image, output classification information classifying the OCT image sections of the respective OCT image with respect to vascular tissue, in particular with respect to neointima, of the blood vessel represented the respective OCT image, and optionally to generate classified OCT images, each classified OCT image comprising the output classification information classifying the OCT image sections of the respective OCT image; and an output interface configured to output the output classification information, and optionally the classified OCT images, for further use and/or to a user.

According to a fourth aspect of present disclosure, a computer program product comprises instructions causing i) a computer, computer system and/or distributed computing environment to execute the steps of the method according to the first aspect, and/or ii) the processor of the apparatus according to the second aspect to execute the steps of the method according to the first aspect.

A preferred aspect of present disclosure is based on the approach of training a first artificial neural network, herein also referred to as "classification network", with a plurality of first OCT training images of blood vessels, wherein each of the first OCT training images is divided into several OCT training image sections, preferably four quadrants, which are located around a center point of an image region, also referred to as "first image segment", representing a lumen or inner cross-section of the blood vessel represented in the respective first OCT training image. The first image segment can be obtained manually, e.g. by an experienced clinician, or by applying a conventional computational image segmentation algorithm to the respective first OCT training image, or preferably by inputting the respective first OCT training image into a second artificial neural network, herein also referred to as "segmentation network", which has been trained according to a method which is described in more detail further below. In a next step, each of the OCT training image sections is classified with respect to the vascular tissue, in particular with respect to neointima, represented in the respective OCT training image section. The classification is preferably done by an experienced clinician, preferably by assigning a respective classification information to the respective OCT training image section, for example one out of the following classes: "homogeneous", "heterogeneous", "neoatherosclerosis" or, optionally, "not analyzable" or "not classifiable". Preferably, classification information can be assigned as follows: "homogenous neointima" or "homogenous" is assigned to quadrants with uniform light reflection without localized areas of stronger or weaker backscattering properties; "heterogenous neointima" or "heterogenous" is assigned to quadrants with focal variation of the backscattering pattern including patterns described as "layered", i.e. superficial high signal intensity with deep low signal intensity; "neoatherosclerosis" is assigned to quadrants with superficial high signal intensity with high back-scattering or well-delineated, signal-poor regions with sharp borders; "not analyzable" is assigned to quadrants without any neointimal tissue (i.e. uncovered struts or opening of a coronary side branch). The OCT training image sections of the first OCT training images are, preferably sequentially or simultaneously, inputted into the first artificial neural network, which outputs an output classification information classifying the respectively inputted OCT training image section with respect to the vascular tissue, in particular neointima, represented in the respectively inputted OCT training image section. The respective output classification information, which preferably relates to one of the aforementioned classes, is compared with the classification information assigned to the respectively inputted OCT training image section.

Preferably, comparing the output classification information with the respective classification information comprises determining, in particular computing, a loss function which quantifies a difference between the expected outcome (i.e. the classification information assigned to the respectively inputted OCT training image section) and the outcome (i.e. the output classification information) produced by a machine learning model of the first artificial neural network. Preferably, the first artificial neural network is adapted and/or updated based on the result of the comparison. For example, gradients which are used to update the weights of the machine learning model can be derived from the loss function.

The first artificial neural network trained in this way can be advantageously used as a fully automated deep learning-based algorithm that enables an accurate characterization of neointimal tissue characteristics and, therefore, provides quick, reliable and observer-independent decision support.

In summary, present disclosure provides an improved method and apparatus for processing OCT images of vascular tissue and system for OCT imaging of vascular tissue.

According to a preferred aspect of present disclosure, a second artificial neural network, which comprises an input layer and an output layer, is trained by: i) providing or receiving, for each of a plurality of second cross-sectional OCT training images of one or more blood vessels, a segmented training image, each segmented training image including a first image segment representing a lumen of a blood vessel in the respective second OCT training image, and, optionally, at least one second image segment representing vascular tissue, in particular neointima, of the blood vessel in the respective second OCT training image, and, optionally, at least one third image segment representing one or more components, in particular one or more struts, of a stent contained in the blood vessel in the respective second OCT training image; ii) inputting the second OCT training images at the input layer of the second artificial neural network; iii) obtaining, for each inputted second OCT training image, an output segmented training image which is outputted at the output layer of the second artificial neural network, the output segmented training image including a first image segment representing a lumen of a blood vessel in the respectively inputted second OCT training image, and, optionally, at least one second image segment representing vascular tissue, in particular neointima, of the blood vessel in the respectively inputted second OCT training image, and, optionally, at least one third image segment representing one or more components, in particular one or more struts, of a stent contained in the blood vessel in the respectively inputted second OCT training image; and iv) comparing, for each inputted second OCT training image, the output segmented training image with the segmented training image of the respectively inputted second OCT training image.

The above aspect is preferably based on the approach of training a second artificial neural network, herein also referred to as "segmentation network", with a plurality of second OCT training images of blood vessels. For each second OCT training image, a segmented training image is provided and/or predefined, for example by applying a conventional computational image segmentation algorithm to the respective second OCT training image and/or by having the segmentation of the second OCT training image performed manually, for example by an experienced clinician. Each of the segmented training images comprises one or more image segments, wherein a first image segment represents a lumen of a blood vessel represented in the respective second OCT training image, and an optional second image segment represents vascular tissue, in particular neointima, of the blood vessel. Optionally, at least one third image segment represents one or more components, in particular one or more struts, of a stent contained in the blood vessel represented in the respective second OCT training image. The second OCT training images are, preferably sequentially or simultaneously, inputted into the second artificial neural network, which outputs, for each of the respectively inputted second OCT training image, an output segmented training image comprising at least two different image segments, wherein a first image segment represents a lumen of a blood vessel represented in the respectively inputted OCT training image and an optional second image segment represents vascular tissue, in particular neointima, of the blood vessel. Optionally, at least one third image segment of the output segmented training image represents one or more components, in particular one or more struts, of a stent contained in the blood vessel. The output segmented training image is compared with the (provided and/or predefined) segmented training image of the respectively inputted second OCT training image.

Preferably, comparing the output segmented training image with the respective segmented training image comprises determining, in particular computing, a loss function which quantifies a difference between the expected outcome (i.e. the segmented training image provided and/or predefined for the respectively inputted second OCT training image) and the outcome (i.e. the output segmented training image) produced by a machine learning model of the second artificial neural network. Preferably, the second artificial neural network is adapted and/or updated based on the result of the comparison. For example, gradients which are used to update the weights of the machine learning model can be derived from the loss function.

It is important to note that the second OCT training images used for training the second artificial neural network can be, at least partially, the same as the first OCT training images used for training the first artificial neural network. Alternatively, the second OCT training images can be different from the first OCT training images. In other words, the second artificial neural network can be trained by using the same, or at least partially the same, set of OCT training images as with the training of the first artificial neural network. Alternatively, the second artificial neural network can be trained with a set of OCT training images which is different from the set of OCT training images used for training the first artificial neural network.

The second artificial neural network trained in this way can be advantageously used as a fully automated deep learning-based algorithm that enables a quick, accurate and standardized segmentation of vascular, in particular neointimal, tissue.

It is, therefore, particularly advantageous to use the trained second artificial neural network, within the training of the first artificial neural network, for an image segmentation of the respective first OCT training image to obtain at least the first image segment representing a lumen of the blood vessel in the respective first OCT training image. Accordingly, in a particularly preferred embodiment the first image segment in the respective first OCT training image is determined by inputting the respective first OCT training image at the input layer of the trained second artificial neural network, and obtaining, at the output layer of the second artificial neural network, i) the first image segment representing the lumen of the blood vessel in the respectively inputted first OCT training image, and, ii) optionally, at least one second image segment representing vascular tissue, in particular neointima, of the blood vessel in the respectively inputted first OCT training image, and, iii) optionally, at least one third image segment representing one or more components, in particular one or more struts, of a stent contained in the blood vessel in the respectively inputted first OCT training image.

In summary, using the trained second artificial neural network for image segmentation in the training of the first artificial neural network results in a fully automated deep learning-based algorithm, herein also referred to as "DeepNeo", which enables a particularly accurate automated segmentation and characterization of neointimal tissue characteristics and, therefore, provides a quick, particularly reliable and observer-independent decision support.

Yet another preferred aspect of present disclosure relates to a method for classifying OCT images with respect to vascular tissue, in particular neointima, of at least one blood vessel represented in the respective OCT image, wherein the method comprises the following steps: a) providing or receiving a plurality of cross-sectional OCT images of at least one blood vessel; b) determining, for each OCT image, a center point of a first image segment representing a lumen of the blood vessel in the respective OCT image; c) dividing each OCT image into OCT image sections, in particular quadrants, located around the center point of the respective OCT image, thereby obtaining a plurality of OCT image sections; and d) inputting the OCT image sections at the input layer of the first artificial neural network which has been trained by the method according to the first aspect, and obtaining, at the output layer of the first artificial neural network, an output classification information classifying the respectively inputted OCT image section with respect to vascular tissue, in particular with respect to neointima, of the blood vessel represented in the respectively inputted OCT image section.

According to this aspect, the trained first artificial neural network is used for classifying OCT images. Analogously to the training of the first artificial neural network described above, each OCT image is divided into OCT image sections, preferably four quadrants, located around a center point of an image segment representing a lumen of the blood vessel which is presented in the respective OCT image, and the OCT image sections are, preferably sequentially or simultaneously, inputted into the trained first artificial neural network, which outputs an output classification information classifying the respectively inputted OCT image section with respect to the vascular tissue, in particular neointima, represented in the respectively inputted OCT image section. Preferably, the output classification information relates to one out of the following classes: "homogeneous", "heterogeneous", "neoatherosclerosis" or, optionally, "not analyzable" or "not classifiable".

In this way, for each OCT image, a classification of the two or more OCT image sections, in particular four quadrants, of the respective OCT image is achieved. The classification information can be outputted to a user, either separately and/or independently from displaying the respective OCT image, e.g. by a message such as "neoatherosclerosis in 3 out of 4 quadrants of image XYZ", or together with the respective OCT image, e.g. by showing and/or depicting the output classification information or according symbols, colors etc. in the respective image section, in particular quadrant, of the respectively displayed OCT image.

According to another particularly preferred aspect of present disclosure, the first image segment of the OCT image is determined by subjecting the respective OCT image to an image segmentation comprising inputting the OCT images at the input layer of the second artificial neural network, which has been trained by the method according to the second aspect, and obtaining, at the output layer of the second artificial neural network, i) the first image segment representing the lumen of the blood vessel in the respectively inputted OCT image, and, ii) optionally, at least one second image segment representing vascular tissue, in particular neointima, of the blood vessel in the respectively inputted OCT image, and, iii) optionally, at least one third image segment representing one or more components, in particular one or more struts, of a stent contained in the blood vessel in the respectively inputted OCT image. According to this aspect, the trained second artificial neural network is used for image segmentation to obtain at least the first image segment representing a lumen of the blood vessel in the OCT image to be classified using the trained first artificial neural network. In this way, the trained second artificial neural network is advantageously used as a fully automated deep learning-based algorithm that enables a quick, accurate and standardized segmentation of vascular, in particular neointimal, tissue in the OCT images to be classified by the trained first artificial neural network.

Preferably, in the context of training the first artificial neural network, the classification information, which is assigned to each OCT training image section, characterizes the vascular tissue, in particular neointima, of the blood vessel represented in the respective OCT training image section as to whether it belongs to one out of at least two of the following tissue classes: homogeneous tissue, heterogeneous tissue, or neoatherosclerotic tissue. Optionally, a further class, such as "not analyzable", can be provided to cover cases where it is difficult and/or impossible to assign a classification information to an OCT training image section.

Preferably, in the context of training the first artificial neural network or using the trained first artificial network for classifying OCT images, the output classification information, which is obtained for each inputted OCT training image section or OCT image section, respectively, characterizes at least one probability with which the vascular tissue, in particular neointima, of the blood vessel represented in the respectively inputted OCT training image section or inputted OCT image section, respectively, belongs, or is considered to belong, to at least two different tissue classes (in particular homogeneous tissue, heterogeneous tissue, neoatherosclerotic tissue, or optionally "not analyzable").

For example, the output classification information may comprise four probability values (e.g. 0.1, 0.7, 0.15 and 0.05) adding up to 1 and characterizing the probability with which the vascular tissue belongs to homogeneous tissue (10% probability), heterogeneous tissue (70% probability), neoatherosclerotic tissue (15% probability), or is not analyzable/classifiable (5% probability).

As exemplarily illustrated above, the output classification information may be regarded as a, preferably discrete, distribution of at least two probability values over at least two tissue classes. Preferably, the at least one distribution of the at least two probability values is adjusted or adjustable by setting a parameter, in particular a temperature parameter, of a mathematical function characterizing the at least one distribution so that a difference or differences between the at least two probability values decrease and/or increase. In this way, the distribution of the discrete probability values for each of the vascular tissue classes outputted by the first artificial neural network can be adapted as needed to improve the performance and/or calibration and/or output of the first artificial neural network, for example by, at least slightly, "flattening" the probability value distribution such that the differences between the respective probability values decreases. This is also referred to as "temperature sharpening" herein.

For example, a discrete distribution of a probability can be adapted or "sharpened" according to:

$$\mathrm{Sharpen}(p, T)_i := p_i^{\frac{1}{T}} \Big/ \sum_{j=1}^{L} p_j^{\frac{1}{T}}$$

where $p_i$ is the initial probability calculated by the artificial neural network with which the current input can be assigned to class i out of a total number of L classes, and T is the sharpening parameter, also referred to as "temperature parameter" or simply "temperature".

Preferably, determining the center point of the first image segment representing a lumen of the blood vessel in the respective first OCT training image or OCT image, respectively, includes determining at least one of the following: a centroid of the first image segment, a center of a bounding box representing the smallest rectangle that completely encloses the first image segment, a center of a medial axis presenting a set of all points that have more than one nearest point on the boundary of the first image segment, and/or a center of a predefined shape, in particular a circle or an ellipse, which is fitted to the first image segment. Preferably, the centroid is the arithmetic mean position of all the points in the first image segment. It can be preferably calculated as: C_x = (1/n) * Σ(x_i) C_y = (1/n) * Σ(y_i), where n is the number of points in the first image segment, and (x_i, y_i) are the coordinates of each point in the first image segment. Preferably, the bounding box center is the center of the smallest rectangle that completely encloses the first image segment. It can be preferably computed by finding the minimum and maximum x and y coordinates of the first image segment, and then taking the average: C_x = (x_min + x_max) / 2 C_y = (y_min + y_max)/2. Preferably, the medial axis is the set of all points that have more than one closest point on the first image segment's boundary. It can be thought of as the "skeleton" of the first image segment. The center of the first image segment can be approximated by finding the center of the medial axis, which is typically done by computing the average of the coordinates of the medial axis points or by finding the point that minimizes the sum of squared distances to the medial axis points. Preferably, shape fitting involves fitting a simpler shape, such as a circle or ellipse, to the irregular shape of the first image segment and then finding the center of the fitted shape. One approach for fitting an ellipse is to use the method of least squares, which minimizes the sum of squared distances between the points on the (usually) irregular shape of the first image segment and the fitted shape. Once the fitted shape is found, its center can be computed using the appropriate formulas for the fitted shape. By at least one of the above methods, the center point of the first image segment (lumen) in the respective first OCT training image or OCT image, respectively, can be determined in a particularly reliable way. Based on the determined center point, dividing the first OCT training images or OCT images, respectively, into the OCT training image sections or OCT image sections, respectively, located around the center point is detected with particularly high precision which further improves both the training of the first artificial neural network and the classification of OCT images using the trained first artificial neural network.

Preferably, for at least one of the first OCT training images or OCT images, respectively, an average output classification information is determined by averaging the output classification information obtained for an OCT training image section of the respective first OCT training image or for an OCT image section of the respective OCT image, respectively, with the output classification information obtained for at least one further OCT training image section or OCT image section, respectively, of at least one neighboring first OCT training image or OCT image, respectively. In this way, the predictions of the first artificial neural network, i.e. the output classification information, are averaged over two or more neighboring and/or surrounding image sections, in particular quadrants, of two or more neighboring and/or surrounding first OCT training images or OCT images, respectively. Hereby, spatial dependencies can be taken into account in a simple and reliable way.

Further aspects, advantages, features and examples of the present disclosure will be apparent from the following description of following figures, wherein:

    Fig. 1 shows a schematic illustrating an example of neointimal tissue characterization;

    Fig. 2 shows examples of an automated characterization of OCT images;

    Fig. 3 shows examples of a 3D reconstruction of neointima, lumen and stents (1), a 3D reconstruction of neointimal tissue prediction (2), and sample frames (3);

    Fig. 4 shows an example of a user interface;

    Fig. 5 shows a schematic illustrating an example of training the first artificial neural network;

    Fig. 6 shows a schematic illustrating an example of training the second artificial neural network; and

    Fig. 7 shows a schematic illustrating an example of an apparatus for processing OCT images and a system for OCT imaging.

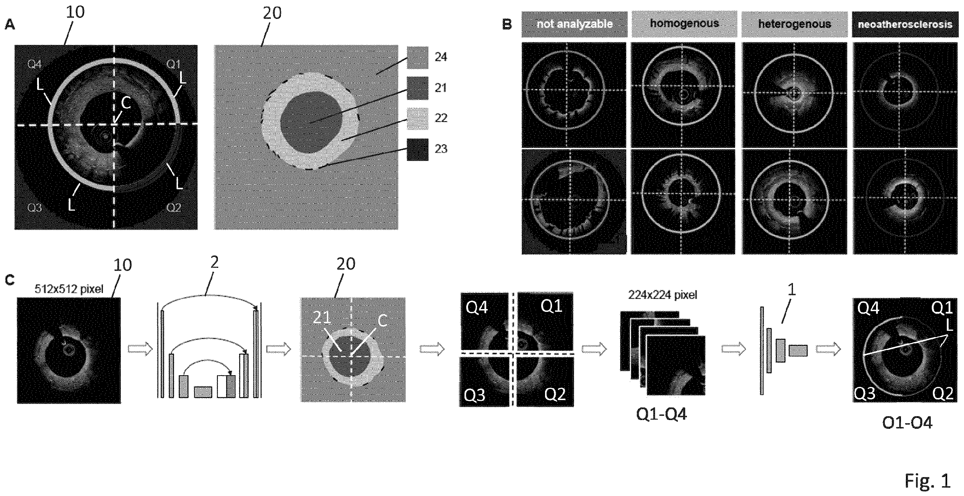

Figure 1 shows a schematic of an example for illustrating neointimal tissue characterization including neointimal tissue segmentation and classification on quadrant level.

Figure 1 A (left) shows a cross-sectional OCT image 10 of a blood vessel, in the following also referred to as "OCT frame", which is divided into four 90° quadrants Q1 to Q4, rotating clockwise around a center point C from 12 o'clock and individually classified to one of four classes indicated by a quarter-circular line L in each quadrant Q1 to Q4. Preferably, depending on the class of the quadrant Q1 to Q4, the lines L have an according color (e.g. blue, green, yellow or red) and/or brightness as in the present grayscale representation.

Figure 1 A (right) shows a segmented cross-sectional OCT image 20 of a blood vessel including a first image segment 21 representing a vessel lumen, a second image segment 22 representing vascular tissue, in particular neointima, and a third image segment 23 representing stent struts of a stent that has been implanted in the vessel. A fourth image segment 24 represents the background of the imaged vessel.

Figure 1 B shows examples of OCT images of blood vessels having homogenous, heterogenous or neoatherosclerosis vascular tissue, respectively, and not analyzable OCT frames.

Figure 1 C shows a schematic to illustrate an example of a preferred workflow and/or architecture for neointimal tissue segmentation and classification: An OCT frame 10 is given as input to a trained artificial neural network 2, which is also referred to as "second artificial neural network" or "segmentation network" herein, to get a segmented OCT image 20, which is also referred to as "segmentation mask". Preferably, the second artificial neural network 2 is a U-Net (UNet++). Preferably, the second artificial neural network 2 was trained by a method disclosed herein and illustrated further below.

As mentioned above with reference to Figure 1 A (right), the segmentation mask 20 contains at least a first image segment 21 which represents the lumen of the blood vessel represented in the OCT image 10. This allows the calculation of the center C of the lumen 21 and the division of the OCT frame 10 into four quadrants Q1 to Q4 at the center C.

Further, after optionally resizing each of the four quadrants Q1 to Q4 to a size of e.g. 224x224 pixels, the quadrants Q1 to Q4 are inputted into another trained artificial neural network 1, which is also referred to as "first artificial neural network" or "classification network" herein. Preferably, the first artificial neural network 1 is a Res-Net-18. The first neural network 1 outputs a classification information O1 to O4 for each of the inputted quadrants Q1 to Q4 regarding the vascular tissue represented in the respective quadrant Q1 to Q4. In present example, the respective output classification information O1 to O4 is represented by accordingly colored and/or bright quarter-circular lines L in the respective quadrants Q1 to Q4. In other words, accordingly colored or, respectively, bright quarter-circles L show the predicted class for each quadrant Q1 to Q4, wherein preferably the line thickness is chosen to indicate the model certainty and/or the probability of the predicted class (thick line = high certainty, thin line = low certainty). Preferably, the first artificial neural network 1 was trained by a method disclosed herein and illustrated further below.

It is noted that, instead of using the trained second artificial neural network 2, the segmentation mask 20 (and particularly the first image segment 21 representing the lumen of which the center point C is determined for subsequently dividing the respective OCT image 10 into four quadrants Q1 to Q4) can also be obtained by a conventional image segmentation algorithm. In other words, the classification of the quadrants Q1 to Q4 of the OCT images 10 using the trained first artificial neural network 1 does not necessarily require using the trained second artificial neural network 2 for obtaining the segmented OCT image 20. However, using the trained second artificial neural network 2 for obtaining the segmented OCT image 20 results in particularly reliable and automatic classification of OCT images 10 by the first artificial neural network 1.

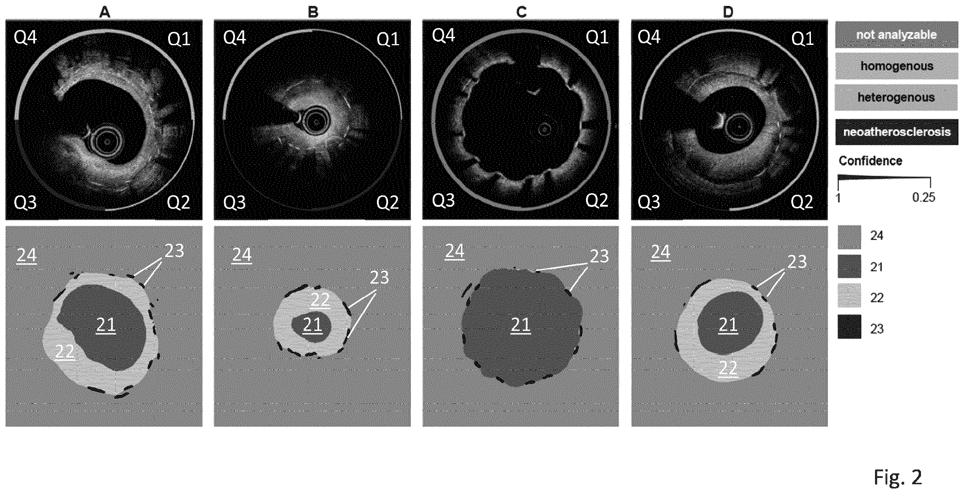

Figure 2 shows examples of an automated characterization of OCT images. The upper row shows an accurate prediction of neointimal tissue characteristics on quadrant level. Figure 2 A: Predominant homogenous neointima with foam cells in Q3 (dark quarter-circle). Figure 2 B: Heterogenous neointima in Q1 and Q4 (medium gray quarter-circles) with foam cell infiltration in Q2 and Q3 (dark quarter-circles). C: No neointima present. D: Mixture of homogeneous (Q1, medium/brighter gray quarter-circle) and heterogenous (Q2 and Q4: medium gray quarter-circles) neointima as well as possible neoatherosclerosis (Q3, dark quarter-circle). Note the low confidence (narrow lines) in B (Q1 and Q3) and D (Q3), reflecting the difficulty to differentiate heterogeneous neointima form neoatherosclerosis in some cases. The lower row shows results of an automated segmentation of the OCT images into lumen 21, neointima 22, stent struts 23 and background 24.

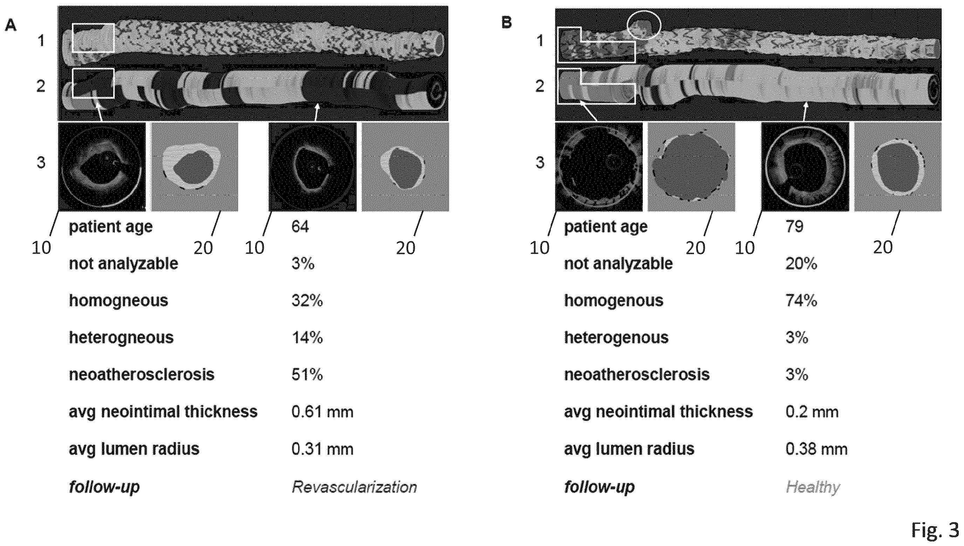

Figure 3 shows examples of a 3D reconstruction of neointima, lumen and stents (1), a 3D reconstruction of neointimal tissue prediction (2), and sample frames (3) for two different patients (A, B). The examples further show results of quantitative statistics derived in each case from the results of the classification of the respective vascular tissue.

For each patient, a plurality of cross-sectional OCT images 10 of a blood vessel (here: a coronary artery) were obtained by a so-called "pullback" of an OCT imaging probe along the longitudinal dimension of the respective blood vessel.

The OCT images 10 were inputted into a trained second artificial neural network 2 (see Figure 1) to obtain a plurality of automatically segmented OCT images 20, each including image segments representing neointima, lumen and stents. Figures 3A (1) and B (1) show a three-dimensional reconstruction and/or representation of the respectively obtained plurality of segmented OCT images 20.

Further, as explained above with reference to Figure 1, the OCT images 10 were divided into four quadrants around the respective center point of the lumen segment (obtained by the image segmentation) of the vessel represented in the respective OCT image 10, and the obtained quadrants of the plurality of OCT images 10 were inputted into a trained first artificial neural network 1 to obtain, for each quadrant of each OCT image 10, a classification information regarding the vascular tissue represented in the respective quadrant. As described above, the respectively outputted classification information can be represented by quarter-circles in different colors and/or different brightness values (as with present grayscale representation) which correspond to the class (homogeneous, heterogeneous, neoatherosclerosis, not analyzable) of the vascular tissue represented in the respective quadrant. Figures 3 A (2) and B (2) show a three-dimensional reconstruction and/or representation of such quarter-circles that were obtained for the plurality of OCT images 10.

Figure 3 A shows results for a 64-year-old male with percutaneous coronary intervention (PCI) of right coronary artery (RCA). OCT imaging was performed 12 months after PCI and, as apparent from the 3D representation of neointimal tissue prediction in Figure 3 A (2) and a statistical analysis thereof, reveals predominately (51 %) neoatherosclerotic neointima (dark quarter-circles), whereas homogeneous and heterogeneous tissue only have a share of 32% or 14%, respectively. The average neointimal thickness is 0.61 millimeters, and the average lumen radius is 0.31 millimeters. During follow-up, the patient underwent a target lesion revascularization (TLR) due in-stent restenosis with unstable angina.

Figure 3 B shows results for a 79-year-old male with PCI of left coronary artery (LAD). OCT imaging was performed 12 months after PCI and, as apparent from the 3D representation of neointimal tissue prediction in Figure 3 B (2) and a statistic analysis thereof, reveals predominantly (74%) homogenous neointima (bright gray quarter-circles), whereas heterogeneous tissue and neoatherosclerotic neointima only have a share of 3% each. The average neointimal thickness is 0.2 millimeters and the average lumen radius is 0.38 millimeters. During follow-up, no adverse events occurred.

It is possible that neoatherosclerosis may lead to a loss of signal leading to undetected stent struts (rectangular box in A.1 and A.2). Note the correct classification of uncovered stent struts as "not analyzable" (L-shaped line in B.1 and B.2) and detection of a side-branch (circle in B.1).

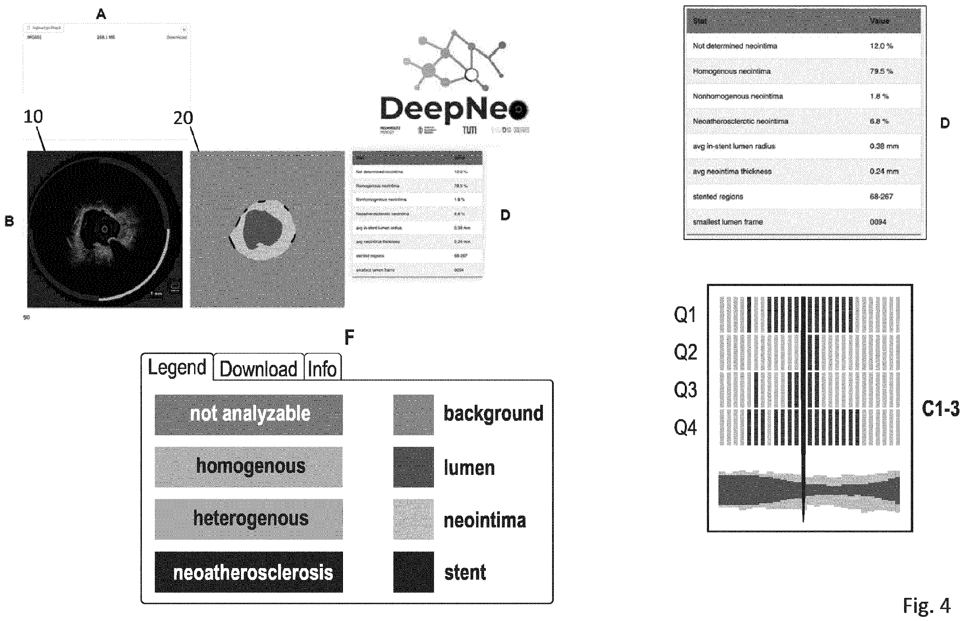

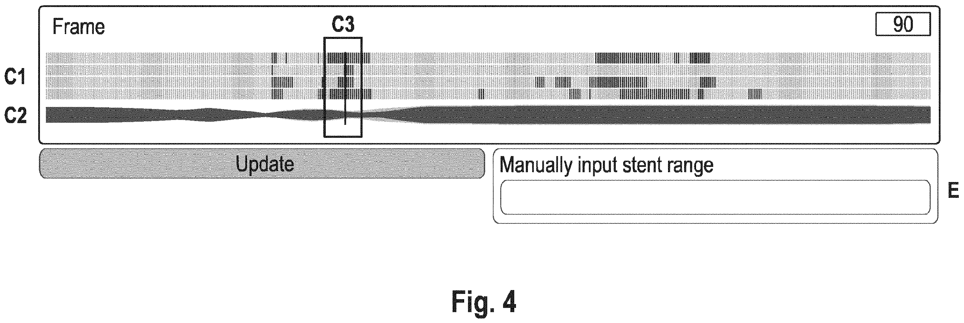

Figure 4 shows an example of a user interface, in particular of a webtool, which is configured to represent results of the segmentation and/or classification and allow a user to easily select and/or retrieve information as desired. The user interface provides a user-friendly platform for the analysis of intravascular OCT images. The interface may include several design features to facilitate accurate and efficient analysis, preferably at least one of:

- an upload mask (A), which allows users to upload OCT pullback images (DICOM or .zip),

- a visual representation (B) of the current OCT frame 10 with neointima prediction and image segmentation 20,

- a schematic view of the classified quadrants (C1) (top row represents quadrant Q1, bottom row quadrant Q4) of the OCT frames 10 obtained by a pullback over the longitudinal direction of the vessel, and, based on the segmented images 20, neointima and lumen (C2) that provides a visual representation of the tissue characteristics, including a slider (C3) that enables users to move through the pullback, and/or

- a pullback analysis (D) that provides a detailed analysis of the obtained OCT images 10 and a manual correction feature (E) to correct beginning and end of the stent, if necessary.

For illustration purposes, (D) and (C1-3) are enlarged in the right part of Figure 4.

Preferably, the webtool also allows users to download a detailed analysis of their results and provides an information tab (F) for additional guidance.

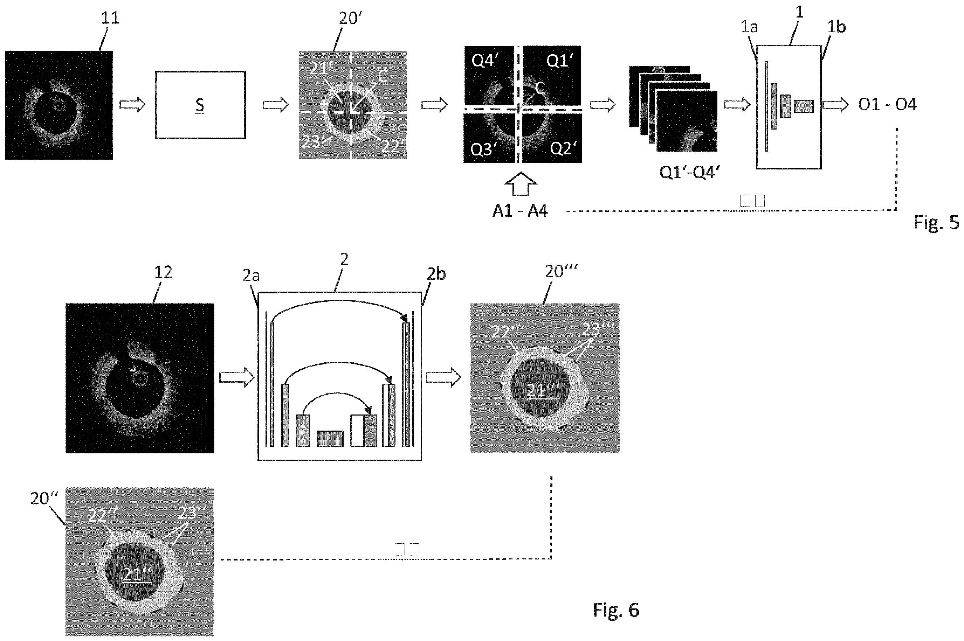

Figure 5 shows a schematic for exemplary illustration of a training of the first artificial neural network 1 based on a plurality of first cross-sectional OCT training images 11 of one or more blood vessels.

In an initial step, the first OCT training images 11 undergo an image segmentation S, whereby, for each first OCT training image 11, a segmented first OCT training image 20' is obtained comprising a first image segment 21' representing the lumen of the respectively imaged blood vessel, and at least one second image segment 22' representing vascular tissue, in particular neointima, of the blood vessel. Optionally, the segmented first OCT training image 20' further comprises at least one third image segment 23' representing one or more components, in particular one or more struts, of a stent contained in the blood vessel.

As explained above, the image segmentation S can be achieved by any conventional image segmentation algorithm or, preferably, by inputting the first OCT training images 11 into a second artificial neural network 2 (see Figures 1 and 6) which was trained by the method disclosed herein and illustrated further below.

In a next step, for each first OCT training image 11, a center point C of the first image segment 21' representing the lumen of the blood vessel represented in the respective first OCT training image 11 is determined. Further, based on the coordinates of the center point C, the respective first OCT training image 11 is divided into four quadrants Q1' to Q4', also referred to as "OCT training image sections", located around the center point C.

Further, for each first OCT training image 10, classification information A1 to A4 is assigned, preferably by a medical expert, to each of the OCT training image sections Q1' to Q4', wherein the classification information A1 to A4 classifies the respective OCT training image section Q1' to Q4' with respect to vascular tissue, in particular with respect to neointima, of the blood vessel represented in the respective OCT training image section Q1' to Q4' of the respective first OCT training image 11.

Then, the first artificial neural network 1, which comprises an input layer 1a and an output layer 1b, is trained by i) inputting the plurality of OCT training image sections Q1' to Q4' obtained for the plurality of first OCT training images 11 at the input layer 1a, ii) obtaining, for each inputted OCT training image section Q1' to Q4', an output classification information O1 to O4 at the output layer 1b, wherein the output classification O1 to O4 information classifies the respectively inputted OCT training image section Q1' to Q4' with respect to vascular tissue, in particular with respect to neointima, of the blood vessel represented in the respectively inputted OCT training image section Q1' to Q4', and iii) comparing, for each inputted OCT training image section Q1' to Q4', the output classification information O1 to O4 with the classification information A1 to A4 assigned to the respectively inputted OCT training image section Q'1 to Q4', preferably by computing, a loss function λ which quantifies a difference between the classification information A1 to A4 assigned to the respectively inputted OCT training image section Q1' to Q4', on the one hand, and the output classification information O1 to O4, on the other hand. Preferably, the first artificial neural network 1 is then adapted and/or updated based on the result of the comparison or based on the loss function λ, respectively.

Figure 6 shows a schematic for exemplary illustration of a training of the second artificial neural network 2, which comprises an input layer 2a and an output layer 2b, based on a plurality of second cross-sectional OCT training images 12 of one or more blood vessels.

Basically, the second OCT training images 12 for training the second artificial neural network 2 can be, at least partially, the same as the first OCT training images 11 used for training the first artificial neural network 1. However, it is also possible that the second OCT training images can 12 be different from the first OCT training images 11. In other words, the second artificial neural network 2 can be trained by using the same, or at least partially the same, set of OCT training images as with the training of the first artificial neural network 1, or by using a different set of OCT training images.

In an initial step i), for each of a plurality of second cross-sectional OCT training images 12 of one or more blood vessels, a segmented training image 20" is provided, for example by applying a conventional image segmentation algorithm to the respective second OCT training image 12 and/or by manual image segmentation by a medical expert. Each segmented training image 20" includes a first image segment 21" representing a lumen of a blood vessel in the respective second OCT training image 12, at least one second image segment 22" representing vascular tissue, in particular neointima, of the blood vessel in the respective second OCT training image 12, and, optionally, at least one third image segment 23" representing one or more components, in particular one or more struts, of a stent contained in the blood vessel in the respective second OCT training image 12.

In a next step ii), the second OCT training images 12 are inputted at the input layer 2a of the second artificial neural network 2, and iii), for each inputted second OCT training image 12, an output segmented training image 20''' is outputted at the output layer 2b of the second artificial neural network 2, the output segmented training image 20''' including a first image segment representing 21''' a lumen of a blood vessel in the respectively inputted second OCT training image 12, at least one second image segment 22''' representing vascular tissue, in particular neointima, of the blood vessel in the respectively inputted second OCT training image 12, and, optionally, at least one third image segment 23''' representing one or more components, in particular one or more struts, of a stent contained in the blood vessel in the respectively inputted second OCT training image 12.

In a following step iv), for each inputted second OCT training image 12, the output segmented training image 20''' is compared with the (manually or by conventional algorithms) segmented training image 20" of the respectively inputted second OCT training image 12, preferably by computing a loss function λ which quantifies a difference between the segmented training image 20" provided and/or predefined for the respectively inputted second OCT training image 12 and the output segmented training image 20'''. Preferably, the second artificial neural network 2 is adapted and/or updated based on the result of the comparison or based on the loss function λ, respectively.

Preferably, for the first and/or second artificial neural network 1, 2 a model calibration can be achieved through so-called temperature sharpening and/or fusion of surrounding quadrants' predictions. In the following, further preferred details on possible augmentation techniques and training specifications for both artificial neural networks are described.

Details of segmentation network

A Unet++ with Resnet18 backbone is preferably used as the segmentation network 2 (second artificial neural network). To train the Unet++, an Adam optimizer with standard parameters is preferably used. The initial learning rate is 0.001, to regulate learning rate, a training rate scheduler by PyTorch is used which reduces the learning rate by multiplying it with a factor of 0.3 if for 5 epochs the validation loss is not decreasing. The input image resolution is 512x512 with one input channel. A batch size of 8 is used with 100 training epochs. Preferably, the Albumentations library is used to augment images during training. Following augmentation techniques are preferably used: Rotate, GridDistortion, ElasticTransform, HorizontalFlip, RandomBrightnessContrast, GaussNoise, RandomGamma. As the loss function, the unweighted sum of dice loss, cross-entropy loss and IoU loss is preferably used.

Preferably, a test time augmentation is used to increase accuracy and make the segmentation mask invariant to rotations by 90,180 and 270 degrees as well as horizontal flipping. This can be done by predicting segmentation masks for not only the initial frame but also on 90, 180 and 270 degree rotated frames on the initial as well as the horizontally flipped frame. This gives a total of eight predictions per frame, and thus eight probability distributions for each pixel of a frame, which are then fused using the mean of the distributions.

Details of classification network and calibration

A Resnet18 is preferably used as the classification network 1 (first artificial neural network). To train the Resnet18, an AdamW optimizer with standard parameters is preferably used. The initial learning rate is 0.001, to regulate learning rate, a training rate scheduler by PyTorch is preferably used which reduces the learning rate by multiplying it with a factor of 0.3 if for 5 epochs the validation loss is not decreasing. The input image resolution is preferably 224x224 with one input channel. A batch size of preferably 32 is used with 100 training epochs. Preferably, the Albumentations library is used to augment images during training. Following augmentation techniques are preferably used: GridDistortion, Elastic-Transform, HorizontalFlip, RandomBrightness-Contrast, GaussNoise, RandomGamma. As the loss function, preferably cross-entropy loss is used.

For training the classification network 1, a test time augmentation is preferably used in a similar fashion as in the segmentation network 2, wherein the same test-time augmentation is also used to generate eight class predictions per quadrant. The resulting distributions are preferably fused using so-called temperature sharpening and then normalizing, which yields better results compared to mean aggregation and produces even more meaningful confidence scores. To account for spatial dependencies in a straightforward manner, in a final step the predictions over the surrounding quadrants are preferably averaged as follows:
For each quadrant k in a frame n, the final distribution $d_{k,n}^{\text{final}}$ is preferably computed by

$$d_{k,n}^{\text{final}} = \frac{\alpha(d_{k,n-1} + d_{k,n+1}) + d_{k,n}}{2\alpha + 1}$$

If frame n+1 or n-1 does not exist or is outside the stented region of the pullback, the corresponding distribution gets removed in the above equation, e.g. the equation is preferably changed to

$$d_{k,n}^{\text{final}} = \frac{\alpha \cdot d_{k,n-1} + d_{k,n}}{\alpha + 1}$$

without frame n+1.

The best value for $\alpha$ can be preferably determined via grid search on the validation set and is set to $\alpha$=0.75. Accounting for surrounding frames in this manner may yield a 5.7% improvement in accuracy.

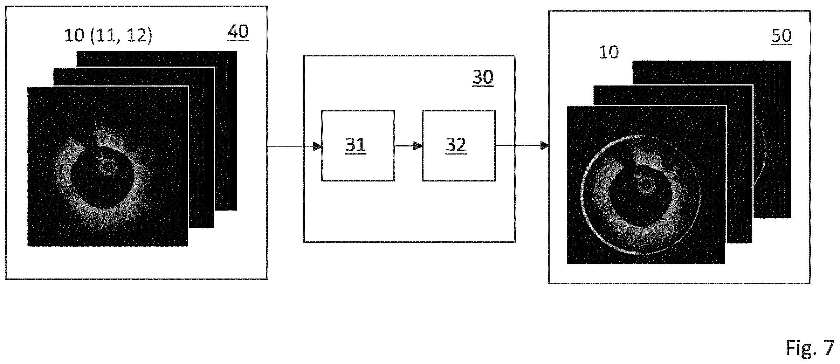

Figure 7 shows a schematic of an example of an apparatus 30 for processing OCT images and a system 30, 40, 50 for OCT imaging and OCT image classification.

The apparatus 30 comprises a receiving interface 31 configured to receive a plurality of first and/or second cross-sectional OCT training images 11, 12 of one or more blood vessels and/or to receive a plurality of cross-sectional OCT images 10 of at least one blood vessel, and a processor 32 configured to process the received first and/or second cross-sectional OCT training images 11, 12 or the received OCT images 10, respectively, according to the training method and/or the method for segmentation and/or classification of OCT images disclosed herein.

The system comprises the apparatus 30, an imaging apparatus 40 configured to acquire cross-sectional OCT images 10, and an output interface 50, for example a display or monitor.

The receiving interface 31 is configured to receive the acquired OCT images 10 and the processor 32 is configured to obtain, for each received OCT image 10, output classification information classifying OCT image sections, preferably the quadrants, of the respective OCT image 10 with respect to vascular tissue, in particular with respect to neointima, of the blood vessel represented the respective OCT image 10.

In the present example, the processor 32 is configured to generate classified OCT images, wherein the output classification information is represented by quarter-circles of different color and/or brightness (which depends on the tissue classification for the respective quadrant obtained from the trained second artificial neural network 2 as described above) and superimposed over the respective OCT image 10. Further, the processor 32 controls the output interface 50 to display the classified OCT images accordingly. Optionally, as explained above with reference to Figure 3, further information regarding quantitative statistics based on the results of the classification can be displayed for the acquired set or "pullback" of OCT images 10.

In summary, present disclosure relates to a fully-automated deep learning-based algorithm, which is particularly suitable for characterization of vascular healing after PCI using OCT imaging. In particular, the algorithm allows for a classification of neointimal tissue into healthy (homogenous), diseased (heterogenous or neoatherosclerosis), or not analyzable with high accuracy, comparable to performance by human observers. Further, it allows for a segmentation of vessel lumen, neointimal area and stent struts, which allows further automated morphometric analysis as well as quick detection and quantification of uncovered stent struts. Last but not least, the accuracy of the prediction was confirmed when using the disclosed algorithm for analyzing OCT-pullbacks with co-registered histopathology from an animal model of neoatherosclerosis.

**Claims**

1. A computer-implemented method for processing optical coherence tomography (OCT) images (10-12) of vascular tissue, the method comprising training a first artificial neural network (1) comprising the following steps:

   a) providing or receiving a plurality of first cross-sectional OCT training images (11) of one or more blood vessels,
   b) determining, for each first OCT training image (11), a center point (C) of a first image segment (21') representing a lumen of the blood vessel in the respective first OCT training image (11),
   c) dividing each first OCT training image (11) into OCT training image sections (Q1'-Q4'), in particular quadrants, located around the center point (C) of the respective first OCT training image (11), thereby obtaining a plurality of OCT training image sections (Q1'-Q4'),
   d) assigning a classification information (A1-A4) to each OCT training image section (Q1'-Q4'), the classification information (A1-A4) classifying the respective OCT training image section (Q1'-Q4') with respect to vascular tissue, in particular with respect to neointima, of the blood vessel represented in the respective OCT training image section (Q1'-Q4'), and
   e) training the first artificial neural network (1), which comprises an input layer (1a) and an output layer (1b), the training comprising:

      i) inputting the plurality of OCT training image sections (Q1'-Q4') at the input layer (1a),
      ii) obtaining, for each inputted OCT training image section (Q1'-Q4'), an output classification information (01-04) at the output layer (1b), the output classification information (01-04) classifying the respectively inputted OCT training image section (Q1'-Q4') with respect to vascular tissue, in particular with respect to neointima, of the blood vessel represented in the respectively inputted OCT training image section (Q1'-Q4'), and
      iii) comparing, for each inputted OCT training image section (Q1'-Q4'), the output classification information (01-04) with the classification information (A1-A4) assigned to the respectively inputted OCT training image section (Q1'-Q4').

2. The method according to claim 1, the method further comprising training a second artificial neural network (2), which comprises an input layer (2a) and an output layer (2b), the training of the second artificial neural network (2) comprising:

   i) providing or receiving, for each of a plurality of second cross-sectional OCT training images (12) of one or more blood vessels, a segmented training image (20"), each segmented training image (20") including a first image segment (21") representing a lumen of a blood vessel in the respective second OCT training image (12), and, optionally, at least one second image segment (22") representing vascular tissue, in particular neointima, of the blood vessel in the respective second OCT training image (12), and, optionally, at least one third image segment (23") representing one or more components, in particular one or more struts, of a stent contained in the blood vessel in the respective second OCT training image (12),
   ii) inputting the second OCT training images (12) at the input layer (2a) of the second artificial neural network (2),
   iii) obtaining, for each inputted second OCT training image (12), an output segmented training image (20‴) which is outputted at the output layer (2b) of the second artificial neural network (2), the output segmented training image (20‴) including a first image segment (21‴) representing a lumen of a blood vessel in the respectively inputted second OCT training image (12), and, optionally, at least one second image segment (22‴) representing vascular tissue, in particular neointima, of the blood vessel in the respectively inputted second OCT training image, and, optionally, at least one third image segment (23‴) representing one or more components, in particular one or more struts, of a stent contained in the blood vessel in the respectively inputted second OCT training image (12), and
   iv) comparing, for each inputted second OCT training image (12), the output segmented training image (20‴) with the segmented training image (20") of the respectively inputted second OCT training image.

3. The method according to claim 2, wherein the first image segment (21') in the respective first OCT training image (11) is determined by inputting the respective first OCT training image (11) at the input layer (2a) of the trained second artificial neural network (2), and obtaining, at the output layer (2b) of the second artificial neural network (2), i) the first image segment (21') representing the lumen of the blood vessel in the respectively inputted first OCT training image (11), and, ii) optionally, at least one second image segment (22') representing vascular tissue, in particular neointima, of the blood vessel in the respectively inputted first OCT training image (11), and, iii) optionally, at least one third image segment (23') representing one or more components, in particular one or more struts, of a stent contained in the blood vessel in the respectively inputted first OCT training image (11).

4. The method according to claim 2 or 3, wherein the plurality of first OCT training images (11) and the plurality of second OCT training images (12) can be the same, partially the same or different images.

5. The method according to any of the preceding claims, the method further comprising classifying OCT images (10) with respect to vascular tissue, in particular neointima, of at least one blood vessel represented in the respective OCT image (10) comprising the following steps:

a) providing or receiving a plurality of cross-sectional OCT images (10) of at least one blood vessel,
b) determining, for each OCT image (10), a center point (C) of a first image segment (21) representing a lumen of the blood vessel in the respective OCT image (10),
c) dividing each OCT image (10) into OCT image sections (Q1-Q4), in particular quadrants, located around the center point (C) of the respective OCT image (10), thereby obtaining a plurality of OCT image sections (Q1-Q4), and
d) inputting the OCT image sections (Q1-Q4) at the input layer(1a) of the first artificial neural network (1) which has been trained by the method according to any one of the preceding claims, and obtaining, at the output layer (1b) of the first artificial neural network (1), an output classification information (L) classifying the respectively inputted OCT image section (Q1-Q4) with respect to vascular tissue, in particular with respect to neointima, of the blood vessel represented in the respectively inputted OCT image section (Q1-Q4).

6. The method according to claim 5, wherein the first image segment (21) of the OCT image (10) is determined by subjecting the respective OCT image (10) to an image segmentation (S) comprising inputting the OCT images (10) at the input layer (2a) of the second artificial neural network (2), which has been trained by the method according to claim 2, and obtaining, at the output layer (2b) of the second artificial neural network (2), i) the first image segment (21) representing the lumen of the blood vessel in the respectively inputted OCT image (10), and, ii) optionally, at least one second image segment (22) representing vascular tissue, in particular neointima, of the blood vessel in the respectively inputted OCT image (10), and, iii) optionally, at least one third image segment (23) representing one or more components, in particular one or more struts, of a stent contained in the blood vessel in the respectively inputted OCT image (10).

7. The method according to any of the preceding claims, wherein the classification information (A1-A4), which is assigned to each OCT training image section (Q1'-Q4'), characterizes the vascular tissue, in particular neointima, of the blood vessel represented in the respective OCT training image section (Q1'-Q4') as to whether it belongs to one out of at least two of the following tissue classes: homogeneous tissue, heterogeneous tissue, or neoatherosclerotic tissue.

8. The method according to claim 7, wherein the output classification information (01-04), which is obtained for each inputted OCT training image section (Q1'-Q4') or OCT image section (Q1-Q4), respectively, characterizes at least one probability with which the vascular tissue, in particular neointima, of the blood vessel represented in the respectively inputted OCT training image section (Q1'-Q4') or inputted OCT image section (Q1-Q4), respectively, belongs, or is considered to belong, to the at least two tissue classes, respectively.

9. The method according to claim 8, wherein the output classification information (O1 to O4) characterizes at least one, in particular discrete, distribution of at least two probability values ($p_i$) over the at least two tissue classes.

10. The method according to claim 9, wherein the at least one distribution of the at least two probability values ($p_i$) is adjusted or adjustable by setting a parameter (T), in particular a temperature parameter, of a mathematical function characterizing the at least one distribution so that a difference or differences between the at least two probability values ($p_i$) decrease and/or increase.

11. The method according to any of the preceding claims, wherein determining the center point (C) of the first image segment (21', 21) representing a lumen of the blood vessel in the respective first OCT training image or OCT image, respectively, includes determining at least one of the following:

- a centroid of the first image segment (21', 21),
- a center of a bounding box representing the smallest rectangle that completely encloses the first image segment (21', 21),
- a center of a medial axis presenting a set of all points that have more than one nearest point on the boundary of the first image segment (21', 21), and/or
- a center of a predefined shape, in particular a circle or an ellipse, which is fitted to the first image segment (21', 21).

12. The method according to any of the preceding claims, wherein, for at least one of the first OCT training images (11) or OCT images (10), respectively, an average output classification information is determined by averaging the output classification information (01-04) obtained for an OCT training image section (Q1'-Q4') of the respective first OCT training image (11) or for an OCT image section (Q1-Q4) of the respective OCT image (10), respectively, with the output classification information (01-04) obtained for at least one further OCT training image section (Q1'-Q4') or OCT image section (Q1-Q4), respectively, of at least one neighboring first OCT training image (11) or OCT image (10), respectively.

13. An apparatus (30) for processing optical coherence tomography (OCT) images of vascular tissue, the apparatus comprising

- a receiving interface (31) configured to receive a plurality of first and/or second cross-sectional OCT training images (11, 12) of one or more blood vessels and/or to receive a plurality of cross-sectional OCT images (10) of at least one blood vessel, and
- a processor (32) configured to process the received first and/or second cross-sectional OCT training images (11, 12) and/or the received OCT images (10), respectively, according to the method specified in one or more of the preceding claims.

14. A system for optical coherence tomography (OCT) imaging of vascular tissue, the system comprising

- an imaging apparatus (40) configured to acquire a plurality of cross-sectional OCT images (10) of at least one blood vessel,
- the apparatus (30) according to claim 13, wherein the receiving interface (31) is configured to receive the acquired OCT images (10), and the processor (32) is configured to obtain, for each received OCT image (10), output classification information (01-04) classifying the OCT image sections (Q1-Q4) of the respective OCT image (10) with respect to vascular tissue, in particular with respect to neointima, of the blood vessel represented the respective OCT image (10), and optionally to generate classified OCT images, each classified OCT image comprising the output classification information (01-04) classifying the OCT image sections (Q1-Q4) of the respective OCT image (10), and
- an output interface (50) configured to output the output classification information (01-04), and optionally the classified OCT images, for further use and/or to a user.

15. A computer program product comprising instructions causing

- a computer, computer system and/or distributed computing environment to execute the steps of the method according to any of claims 1 to 12, and/or
- the processor (32) of the apparatus (30) according to claim 13 to execute the steps of the method according to any of the claims 1 to 12.

Fig. 1

Fig. 2

Fig. 3

Fig. 4

EP 4 475 072 A1

Frame

C3

C1

C2

Update

Manually input stent range

EP 4 475 072 A1

E

**Fig. 4**

Fig. 5

Fig. 6

Fig. 7

Europäisches
Patentamt

European
Patent Office

Office européen
des brevets

# EUROPEAN SEARCH REPORT

**Application Number**

**EP 23 17 8433**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/126070 A1 (UNIV LEUVEN KATH [BE]; ADRIAENSSENS TOM [BE] ET AL.) 27 September 2012 (2012-09-27) * page 1 – page 4 * * page 10 – page 14 * ----- | 1-6,11, 13-15 | INV. G06T7/00 G06T7/11 G06T7/66 |
| A | | 7-10,12 | |
| A | WO 2022/031945 A1 (CANON USA INC [US]; KUNIO MIE [JP]) 10 February 2022 (2022-02-10) * paragraph [0007] – paragraph [0011] * ----- | 1-15 | |

**TECHNICAL FIELDS SEARCHED (IPC)**

G06T

The present search report has been drawn up for all claims

| Place of search | Date of completion of the search | Examiner |
|---|---|---|
| Munich | 23 November 2023 | Maier, Werner |

EPO FORM 1503 03.82 (P04C01)

## ANNEX TO THE EUROPEAN SEARCH REPORT
## ON EUROPEAN PATENT APPLICATION NO.

EP 23 17 8433

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2023

| Patent document cited in search report | | Publication date | Patent family member(s) | | Publication date |
|---|---|---|---|---|---|
| WO 2012126070 | A1 | 27-09-2012 | NONE | | |
| WO 2022031945 | A1 | 10-02-2022 | JP | 2023537483 A | 01-09-2023 |
| | | | US | 2023289956 A1 | 14-09-2023 |
| | | | WO | 2022031945 A1 | 10-02-2022 |

EPO FORM P0459

For more details about this annex : see Official Journal of the European Patent Office, No. 12/82